# EUROPÄISCHE PATENTSCHRIFT

(11) **EP 2 607 309 B1**
(45) Veröffentlichungstag und Bekanntmachung des Hinweises auf die Patenterteilung: **17.09.2014**
(21) Anmeldenummer: 12196041.3
(22) Anmeldetag: 07.12.2012
(51) Int. Cl.: C01B 33/02, C01B 33/035

(54) **Polykristallines Siliciumstück und Verfahren zum Brechen eines Siliciumkörpers**
Polycrystalline silicon portion and method for breaking a silicon body
Pièce en silicium polycristallin et procédé de rupture d'un corps en silicium

(30) Priorität: 21.12.2011 DE 102011089356
(43) Veröffentlichungstag der Anmeldung: 26.06.2013
(73) Patentinhaber: Wacker Chemie AG, 81737 München (DE)
(72) Erfinder: Fabry, Laszlo, Dr., 84489 Burghausen (DE); Grübl, Peter, 94428 Eichendorf (DE); Huber, Christian, 84489 Burghausen (DE)
(74) Vertreter: Killinger, Andreas

(56) Entgegenhaltungen:
- EP-A1- 2 423 163
- EP-A2- 0 345 618
- DE-A1- 19 749 127

## Beschreibung

Die Erfindung betrifft ein Verfahren zum Brechen eines Siliciumkörpers sowie ein polykristallines Siliciumstück.

Insbesondere betrifft die Erfindung ein Verfahren zum Brechen von Polysiliciumstäben.

Polykristallines Silicium (Polysilicium) wird üblicherweise hergestellt durch Gasphasenabscheidung in einem Siemens-Reaktor. Dabei werden hochreines Silan oder Chlorsilan auf einem heißen Substrat (bevorzugt aus Silicium) abgeschieden, so dass massive Stäbe, Blöcke oder Bretter erhalten werden.

Bevor man dieses Polysilicium in Kristallisationsverfahren verwenden kann, muss man es zerkleinern. Im Herstellungsprozess von Reinstsilicium ist es an verschiedenen Prozessschritten notwendig, Siliciumstäbe verschiedener Querschnitte und Längen zu brechen, um diese als Stabstücke oder Bruchstücke (Chips, chunks) unmittelbar oder nach sich daran anschließenden Mahlprozessen in andere Herstellungsschritte als Ausgangsmaterial einzubringen.

Im Stand der Technik wird in einem ersten Schritt ein Siliciumstab, wie er aus einem Siemens Abscheidereaktor erhalten wird, mit einem Handhammer vorgebrochen und anschließend mit einem Niethammer händisch auf die erforderliche Bruchgröße nachzerkleinert. Dieser manuell erzeugte Grobbruch kann als Aufgabematerial weiter maschinell zerkleinert werden, beispielsweise mit einem Backenbrecher oder einem Walzenbrecher.

Das Zerteilen längerer Stäbe, die 2 bis 3 m lang sein können, sollte so erfolgen, dass durch die Einwirkung mechanischer Kräfte das Grundmaterial Reinstsilicium möglichst gering kontaminiert wird und möglichst geringe Materialverluste (Feinbruch) entstehen.

Beim Brechen längerer Stäbe sollten die eingesetzten Brechwerkzeuge in den Kontaktflächen zwischen Werkzeug und Werkstück keine unzulässigen Abriebpartikel übertragen und mit möglichst geringen Kräften einwirken.

Herkömmliche maschinelle Brechverfahren der Bautechnik bzw. des Bergbaus benötigen hohe Schlagkräfte und harte Meisselwerkstoffe.

Diese enthalten immer Werkstoffbestandteile, welche für Reinstsiliciumanwendungen bereits in Spuren unerwünscht sind, weil sie in Weiterverarbeitungsschritten Qualitätsprobleme verursachen bzw. die physikalischen Halbleitereigenschaften (z.B. durch Dotierstoffe) direkt beeinflussen.

US 7,950,308 B2 offenbart einen Hammer für das manuelle Brechen von Polysilicium. Der Hammerkopf besteht aus Hartmetall. Diese Art der Vorzerkleinerung führt zu unerwünschten Kontaminationen mit Metallen insbesondere an den Oberflächen um den Bereich des Aufpralls des Hammers einschließlich der Bruchfläche, also einer neuen Oberfläche, die an einem Bruchstück des zuvor Ganzen offenliegt. Zudem enstehen feinbruchartige Materialverluste.

DE 10 2008 024 411 A1 beschreibt die Zerkleinerung eines Silicium aufweisenden Ausgangsstoffes durch gepulste Stoßwellen: Dabei entstehen Siliciumpartikel mit einem Durchmesser von 0,1 µm - 1 cm. Für größere Bruchstücke oder die Erzeugung von Stabstücken ist das Verfahren ungeeignet.

DE 42 18 283 A1 offenbart ein Verfahren zum kontaminationsfreien Zerkleinern von Halbleitermaterial, insbesondere Silicium, wobei das Halbleitermaterial Stosswellen ausgesetzt wird. Stosswellen werden durch Wasser als Übertragungsmedium auf das Halbleitermaterial übertragen. Die Erzeugung der Stosswellen kann im Brennpunkt eines Halbellipsoidreflektors durch elektrische Entladung zwischen zwei Elektroden erfolgen. Dabei entstehen Bruchstücke unterschiedlicher Größe.

Zweckmäßigerweise wird das Halbleitermaterial solange Stosswellen ausgesetzt, bis eine gewünschte Grenzgröße des Bruchstücks erreicht oder unterschritten ist.

Zum Vorzerkleinern oder zur Erzeugung von Stabstücken definierter Größe ist das Verfahren nicht geeignet.

DE 197 49 127 A1 beschreibt ein Verfahren zur Vorbereitung der Zerkleinerung eines stabförmigen Kristalls, wobei auf den Kristall ein Impuls übertragen wird, der eine Schlagwirkung besitzt. Dabei kommen mechanische Schlagwerkzeuge oder Stoßwellen zum Einsatz. Der Impuls kann durch einen Flüssigkeitsstrahl übertragen werden. Dabei bilden sich Mikrorisse, die nachfolgendes Brechen erleichtern sollen.

Ebenfalls bekannt ist die Zerkleinerung eines Siliciumstabs durch thermischen Schock. JP3285054 A verwendet dazu Laser-Erwärmung. Nachteilig an diesem Verfahren ist, dass bei hohen Temperaturen Diffusionsvorgänge in Gang gesetzt werden. Dabei gelangt zumindest ein Teil der oberflächlichen Verunreinigungen, insbesondere Fremdmetalle, in den Bulk des Stabes oder der Bruchstücke und ist einer späteren Oberflächenreinigung / Ätzen entzogen.

Alle aus dem Stand der Technik bekannten Vorzerkleinerungsschritte sind also mit hohem Energieverbrauch, einem teils hohen apparativen Aufwand, aber vor allem mit feinbruchartigem Verlust sowie mit unerwünschter Verunreinigung des zu brechenden Werkstücks verbunden.

Aus dieser Problematik ergab sich die Aufgabenstellung der Erfindung.

Die Aufgabe der Erfindung wird gelöst durch ein Verfahren zum Brechen eines Siliciumkörpers, vorzugweise eines Stabs aus polykristallinem Silicium, umfassend die Schritte:
a) Bestimmung der niedrigsten Biegeigenfrequenz des Siliciumkörpers
b) Anregung des Siliciumkörpers in seiner niedrigsten Biegeigenfrequenz mittels eines Schwingungserregers, wobei die Anregung an einer Anregungsstelle des Siliciumkörpers derart erfolgt, dass der Siliciumkörper an der Anregungsstelle bricht, so dass ein Siliciumstück mit einer Bruchfläche resultiert.

Es hat sich gezeigt, dass das Verfahren geeignet ist, polykristalline Siliciumstücke zu erzeugen, die eine äußerst niedrige Kontamination mit Metallen von 0,07 ng/cm² bis 1 ng/cm an der Bruchfläche aufweisen.

Beim zum brechenden Siliciumkörper kann es sich um einen Siliciumstab, ein Siliciumstabstück oder ein bereits vorzerkleinertes Siliciumfragment handeln.

Vorzugsweise handelt es sich um einen Siliciumstab.

Vorzugsweise handelt es sich um einen Stab aus polykristallinem Silicium.

Unter Bruchfläche ist im Sinne der Erfindung eine neue Oberfläche einschließlich eines Initialrisses bzw. Initialbruchs eines Siliciumstücks zu verstehen, das durch Brechvorgang an einem Siliciumkörper offengelegt wird bzw. entsteht und zuvor im Innern (bulk) des Siliciumkörpers befindlich war.

Vorzugsweise weist das polykristalline Siliciumstück an der Bruchfläche eine Verunreinigung von 0,07 ng/cm² bis 0,65 ng/cm², besonders bevorzugt 0,07 ng/cm² bis 0,32 ng/cm² auf.

Vorzugsweise weist das polykristalline Siliciumstück an der Bruchfläche folgende Verunreinigungen auf:
Fe 0,01-0,08ng/cm², Cu 0,01-0,12ng/cm², Ni 0,01-0,06ng/cm², Cr 0,01-0,08ng/cm², Na 0,01-0,12ng/cm², Zn 0,01-0,06ng/cm², Al 0,01-0,10ng/cm².
wobei weitere oberflächliche Kontaminationen des Siliciumstücks nicht nachweisbar sind.

Besonders bevorzugt weist das polykristalline Siliciumstück an der Bruchfläche folgende Verunreinigungen auf:
Fe 0,01-0,04ng/cm², Cu 0,01-0,06ng/cm², Ni 0,01-0,03ng/cm², Cr 0,01-0,04ng/cm², Na 0,01-0,06ng/cm², Zn 0,01-0,03ng/cm², Al 0,01-0,05ng/cm².

Insbesondere sind an den Oberflächen des Siliciumstücks, die keine Bruchfläche gemäß o.g. Definition beinhalten, keine Kontaminationen nachweisbar.

Bei einem manuellen Brechen eines Siliciumkörpers mittels eines Hammers nach Stand der Technik treten an der Bruchfläche (Einschlagstelle und durch das Brechen offengelegte Oberfläche) deutlich höhere metallische Kontaminationen auf.

Vorzugsweise zeichnet sich das Siliciumstück durch folgende Gesamtkonzentrationen (Bulk und Oberfläche) an Metallen und Halbmetallen aus:
Cr von 0,5-5 pptw, W 0,1-0,5 pptw, Au 0,001-0,1 pptw, Fe 20-50 pptw, Co 0,05-0,3 pptw, Ni 30-70 pptw, Cu 30-50 pptw, Zn 1,5-3 pptw, As 0,05-4 pptw, Sb 0,02-0,6 pptw.

Derart niedrige Metallwerte waren im Stand der Technik selbst durch nachfolgende Reinigungsverfahren, die geeignet sind, die Oberflächenkontamination zu reduzieren, nicht zu bewerkstelligen.

Bulk-Konzentrationen werden bestimmt mittels INAA, vgl. **Tabelle 1**.

Zur Bestimmung der Verunreinigungen an der Oberfläche wurde die sog. "Puddle Etch Test - PET" Messmethode verwendet.

Diese Messmethode ist offenbart in L. Fabry et al: Diagnostic and Monitoring Tools of Large Scale Si-Manufacturing in IEEE Transactions on Semicond. Manuf., Vol. 9, No. 3, pp. 428-436.

Unter einem Flowhood der Reinraumklasse ISO < 3 (EN ISO 14644-1) wird auf eine horizontale, relativ flache Stelle der Brechfläche 50 µL von Flusssäure ("subboiled" von einer PFA-Destille, 50%) aufgetragen.

Unter "Subboiled" ist zu verstehen: destilliert durch Oberflächenverdampfung unter dem Siedepunkt. PFA= Perfluoroalkoxy-Polymer, ein Kopolymer von Tetrafluorethylen (TFE) und Perfluoralkoxyvinylethern.

Wenn der Flusssäuretropfen sich auf etwa 10 mm ausgebreitet hat, wird auf dieselbe Stelle 200 µL Salpetersäure ("subboiled" aus einer Quarz-Destille frisch destilliert, 60%) addiert.

Nach 10 Min Ätzzeit bei Raumtemperatur kann die Ätzlösung mit einer µ-Pipette abgetragen und deren Metallgehalt mittels ICP-MS bzw. GF-AAS bestimmt werden.

### Beispiel 1

Es wurden 4 Siliciumstücke aus einem polykristallinen Siliciumstab erzeugt. Anschließend wurde jeweils eine Probe aus den vier Siliciumstücken mittels INAA (instrumentelle Neutronen-Aktivierungsanalyse) untersucht.

Bei INAA Messungen werden Polysiliciumproben nach einer Reinigungsätze der Oberfläche in einem Kernreaktor bestrahlt. Die metallischen Kontaminationen verwandeln sich in radioaktive Isotope. Der Zerfall der radioaktiven Kerne, d.h. die GammaStrahlung wird dann gemessen.

Die INAA Methode hat den Vorteil, dass sie für die meisten Metalle sehr niedrige Nachweisgrenzen besitzt. Diese liegen für Fe, Cr und Ni typischerweise bei 20-50 pg/g [pptw] Silicium.

Die INAA-Methode ist beschrieben im Standard SEMI PV10-1110 (SEMI^{®}, Semiconductor Equipment and Materials International).

Abweichend vom Standard wurde die Messung ohne Ätzen nach Spülen mit Reinstwasser angewendet.

**Tabelle 1** zeigt die Ergebnisse der INAA-Messungen für einige ausgewählte Metalle und Halbmetalle (Angaben in pptw).

### Detaillierte Beschreibung des Verfahrens

Die Erfindung ermöglicht es, Siliciumkörper wie Stäbe oder Stabstücke schwingungstechnisch so anzuregen, dass durch Ausnutzung des Resonanzeffekts die notwendigen Kontaktkräfte nahezu um zwei Zehnerpotenzen minimiert werden.

Dies gestattet den Einsatz von Werkstoffen im Kontaktbereich, welche weniger kontaminationskritisch sind (z.B. PVDF, Polyvinylidenfluorid).

**Tabelle 1**

| Element | **01** | **02** | **03** | **04** |
|---|---|---|---|---|
| Na | < 186 | < 176 | < 168 | < 181 |
| Cr | 4,4 | 2,5 | 3,2 | 3,0 |
| Fe | < 24 | < 43 | < 23 | < 30 |
| Co | < 0,054 | < 0,19 | < 0,047 | < 0,068 |
| Ni | < 38 | < 68 | < 35 | < 46 |
| Cu | < 34 | < 41 | < 33 | < 25 |
| Zn | < 1,5 | < 2,9 | < 1,3 | < 2,1 |
| Ga | < 0,27 | < 0,25 | < 0,25 | < 0,56 |
| As | 1,8 | 3,4 | 2,0 | 3,4 |
| Ag | < 0,27 | < 0,50 | < 0,32 | < 0,44 |
| Cd | < 3,3 | < 2,6 | < 2,2 | < 1,9 |
| In | < 9,9 | < 39 | < 3,3 | < 15 |
| Sn | < 29 | < 51 | < 55 | < 34 |
| Sb | 0,57 | 0,51 | 0,54 | 0,59 |
| Te | < 0,75 | < 0,88 | < 0,81 | < 0,51 |
| Ba | < 27 | < 37 | < 27 | < 22 |
| Ta | < 0,046 | < 0,14 | < 0,042 | < 0,061 |
| W | 0,38 | 0,43 | 0,42 | 0,44 |
| Pt | < 76 | < 82 | < 51 | < 36 |
| Au | 0,089 | 0,062 | 0,091 | 0,075 |

Darüber hinaus ist es auch maschinentechnisch von Vorteil, mit geringeren Kräften arbeiten zu können.

Die Erfindung sieht vor, den Siliciumkörper bei geeigneter Lagerung mittels eines Schwingungserregers in seiner niedrigsten Biegeeigenfrequenz vorzugsweise für nur wenige Sekunden so anzuregen, dass dieser an der Anregungsstelle, welche auch das Maximum der Biegewechselspannung darstellt, bricht.

Die Anregung kann je nach Art des zu brechenden Siliciumkörpers mit technisch üblichen Schwingungserregern erfolgen.

Dies sind beispielhaft elektrodynamische Erreger, Hydraulik-Erreger oder gerichtete Unwuchterreger.

Für die Resonanzanregung ist es erforderlich, einen Messvorgang zur Bestimmung der niedrigsten Biegeeigenfrequenz vorzuschalten.

Dieser kann automatisiert mit messtechnischen Einrichtungen erfolgen, welche nach dem Anschlagverfahren die Stabeigenfrequenz ermitteln.

Die Anregung für den Brechvorgang hängt von den steuerungstechnischen Möglichkeiten der verwendeten Erreger ab.

Vorzugsweise handelt es sich um einen Gleitsinus mit einer Bandbreite der Anregung von +/- 5% der Resonanzfrequenz und Frequenzänderungsgeschwindigkeit kleiner 0,25 dB/Octave.

Andere Anregungssignalformen (beispielsweise: white Noise, Chirp, burst Random, Impulse Chain usw.) sind ebenfalls anwendbar und bevorzugt.

Die Einbringung der Erregerkräfte kann bevorzugt durch mechanische Ankopplung über Koppelstange aus einem steifen/starren Material aber auch durch andere bekannte Ankopplungsverfahren erfolgen (z.B. berührungslose elektromagnetische Verfahren).

Vorzugsweise wird ein stabförmiges Polysiliciumwerkstück an beiden Enden wie eine Brücke, mit einer Bodenfreiheit von mindestens 20 mm, vorzugsweise 20-100 mm, besonders bevorzugt 50-100 mm, über einer Siliciumplatte stabil befestigt.

Von oben wird ein Schwingungserreger mit möglichen Anregungsfrequenzen von 10 Hz bis 300 Hz mechanisch an den Stab angekoppelt.

Eine Rückkopplung zeigt die Eigenresonanz des Stabes, wobei der Stab angeregt wird, bis er in zwei Stücke bricht ("Aufschaukeln", Resonanzkatastrophe).

Die Funktionsweise des Verfahrens besteht darin, hohe Schwingungsamplituden zu erzeugen und den Resonanzeffekt eines sehr gut biegeeigenschwingungsfähigen Systems, wie es ein Siliciumstab darstellt, auszunutzen.

Die Resonanzüberhöhung erreicht besonders hohe Werte, weil der Werkstoff Silicium, ähnlich wie Federstahl, eine sehr geringe Materialeigendämpfung besitzt.

Der Kraftaufwand liegt um einen Faktor 50-100 niedriger als bei herkömmlichen mechanischen Bruchverfahren, was vorteilhaft ist.

Die Vorteile des erfindungsgemäßen Verfahrens bestehen zum einen darin, dass weniger Kraftaufwand benötigt wird und dass kein Transfermedium erforderlich ist, dass eine Kontaminationsqeulle darstellen kann.

Der apparative Aufwand ist gering.

Zudem ergeben sich äußerst geringe Materialverluste durch Feinbruchabfall, da der Stab unmittelbar nach lokal enstehenden Mikrorissen bricht. Es entstehen relativ glatte Bruchflächen.

Das Verfahren arbeitet praktisch kontaminationsfrei, da an den Kontaktflächen wesentlich geringere Kräfte wirken und - was besonders bevorzugt ist - Werkstoffe geringerer Festigkeit (z.B. Kunststoffe) an Aufspannungen und Ankopplungsstellen zum Einsatz kommen.

Die Erfindung wird nachfolgend anhand von Figuren erläutetr.
**Fig. 1** zeigt eine schematische Darstellung der Erfindung.
**Fig. 2** stellt eine Vergrößerungsfunktion (Resonanzkurve) in Abhängigkeit vom Abstimmverhältnis für drei Dämpfungsgrade dar.
**Fig. 3** zeigt die Vergrößerung in Resonanz in Abhängigkeit vom Dämpfungsgrad.
**Fig. 4 A-C** stellen die Schwingungsantwort in der Resonanzstelle in Abhängigkeit der Erregerkraft als Schwingweg (A), Schwinggeschwindigkeit (B) und Schwingbeschleunigung (C) dar.

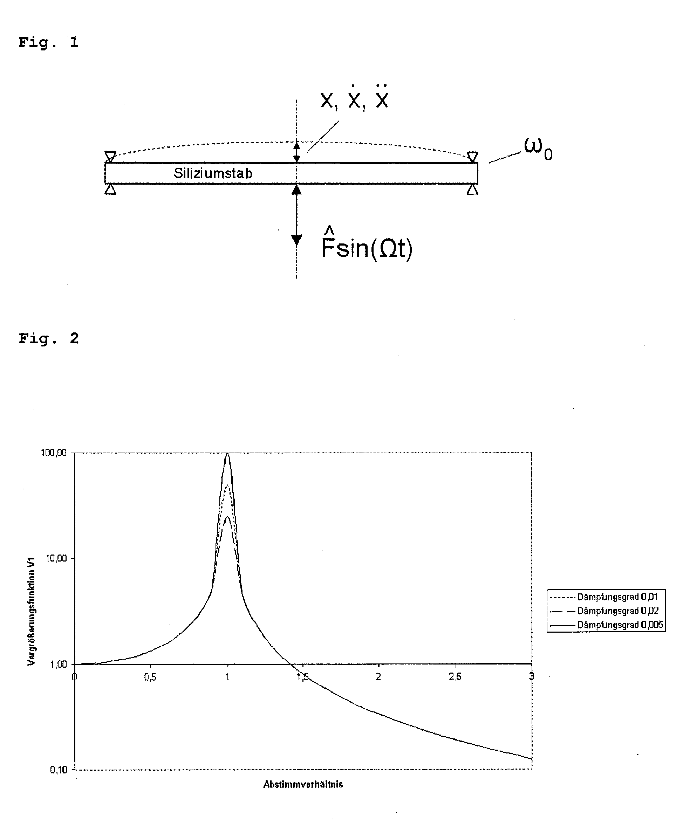

**Fig. 1** zeigt schematische den Aufbau zur Durchführung des Verfahrens.

Der Siliciumstab wird beidseitig weitgehend biegemomentfrei so eingespannt, dass die aus der Anregung entstehenden Auflagekräfte (vorwiegend in der Anregungsebene) aufgefangen werden.

Besonders geeignet ist eine Anregung in vertikaler Richtung.

Nach Bestimmung der niedrigsten Stab-Biegeeigenfrequenz erfolgt die Anregung.

Der Siliciumstab antwortet mit der dynamischen Biegelinie.

An der Anregungsstelle resultieren die Maximalwerte

| | |
|---|---|
| des Weges | *X* |
| der Geschwindigkeit | *Ẋ* |
| und der Beschleunigung | *Ẍ* |

| | |
|---|---|
| (vgl. **Fig. 1**) | |

Durch Ausnutzung der Resonanzüberhöhung können abhängig von Dämpfungseinflüssen mit geringen Kräften große Auslenkungen erzielt werden.

Diese bewirken hohe Biegewechselspannungen in den Randfasern des Stabes und Führen zum Anriss (Mikrorisse) bzw. sofort nachfolgendem Durchriss bzw. Bruch.

Ein stabförmiger Körper ist abhängig von Auflagerung und Anregung zu Biege- und Torsionseigenschwingungen fähig. Zur Erzeugung hoher Werkstoffspannungen an einer definierten Stelle ist die Anregung der niedrigsten Biegeeigenfrequenz am zielführendsten. Entsprechend Festigkeitslehre entspricht dies dem beidseitig gelenkig gelagerten Biegebalken mit kontinuierlicher Massebelegung durch Eigengewicht und Anregung auf halber Stablänge. Bei nicht symmetrischen Körpern erfolgt die Anregung senkrecht zur Linie des kleinsten axialen Trägheitsmoments. Die Schwingungsform des Stabes und statische Biegelinie sind identisch.

Das physikalische Modell entspricht der Kraftanregung des gedämpften Feder-Masse-Schwingers.

**Fig. 2** stellt die Vergrößerungsfunktion bzw. Resonanzkurve in Abhängigkeit vom Abstimmverhältnis für drei Dämpfungsgrade dar.

Die Überhöhung in der Resonanzstelle ist abhängig von der vorliegenden Systemdämpfung. Je geringer die Dämpfung, desto höher ist der Resonanzpeak.

Die Systemdämpfung setzt sich zusammen aus der inneren Werkstoffdämpfung des Biegeträgers, Dämpfungen des Lagerungssystems und Dämpfungen an den Kontaktstellen. Die innere Werkstoffdämpfung von rissfreiem Silicium ist sehr gering und vergleichbar dem von Stahl.

Der Wert des Maximums der Vergrößerung in der Resonanzstelle ist der Faktor, um den eine höhere Auslenkung bei gleicher Kraft wie im statischen bzw. quasistatischen Bereich, erzielt wird.

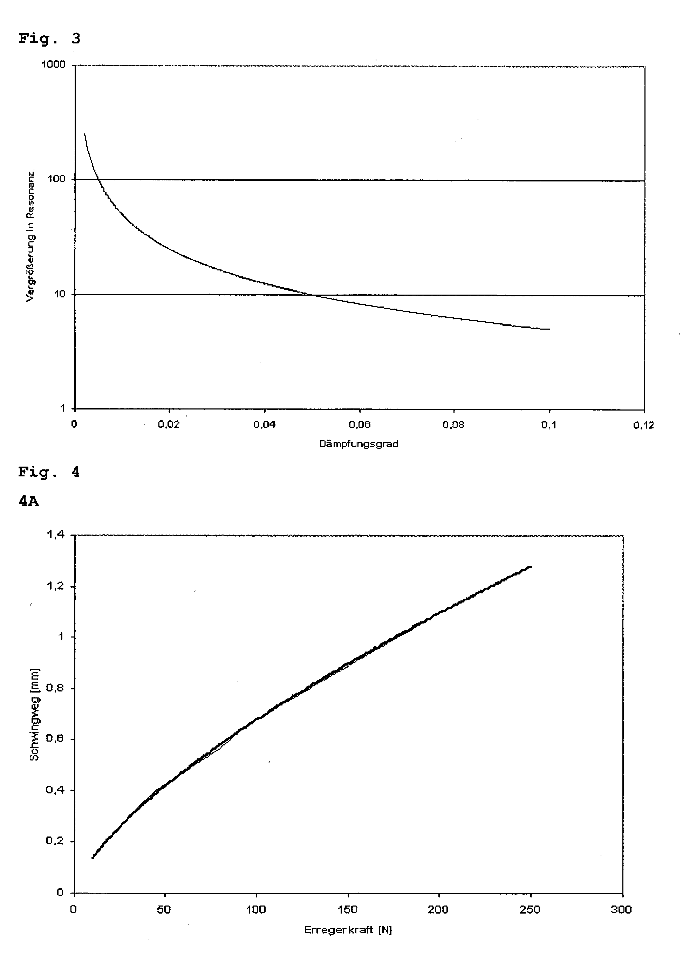

**Fig. 3** zeigt die Vergrößerung in Resonanz in Abhängigkeit vom Dämpfungsgrad, somit das Maximum der dämpfungsabhängigen Vergrößerung in der Resonanzstelle.

Für Poly-Silicium ist je nach Herstellungsprozess von Dämpfungsgraden im Bereich 0,001 bis 0,005 auszugehen. Sie stellen keine Werkstoffkonstante dar, sondern steigen mit zunehmender Werkstoffspannung.

Die Bruchfestigkeit von Silicium beträgt je nach Herstellungsprozess bis zu 7 GPa.

Die Bestimmung der Biegewechselfestigkeit kann an die Vorgehensweise bei technischer Keramik angelehnt werden (z.B. Ermittlung der Wöhlerkurve nach Biegewechselversuch; Weibull-Statistik; Thermoschockverhalten)

Für hochbeanspruchte Ingenieurkeramik sind Werte von 200 bis 300 MPa bekannt.

Die Werte von Silicium liegen niedriger und sind stark abhängig vom Herstellungsprozess und weiteren Materialeigenschaften wie Eigenspannungen, Rissfreiheit, Abscheidegeschwindigkeit usw.

Die Biegewechselfestigkeit sinkt mit zunehmender Frequenz.

Zur Erzeugung einer hohen Biegewechselspannung ist primär eine große Wegamplitude erforderlich.

Die zugehörigen Schwinggeschwindigkeiten und Schwingbeschleunigungen stellen die Einfach- bzw. Doppelintegration der Wegamplitude über der Zeit dar.

Liegt ein Stab vor, der eine hohe Biegeigenfrequenz (z.B. über 200 Hz) aufweist, werden mit zunehmender Frequenz bei gleichen Wegamplituden die Schwinggeschwindigkeiten und Schwingbeschleunigungen sehr hoch.

Dies kann die Anwendung des Verfahrens begrenzen.

Umgekehrt bewirken sehr hohe Schwingbeschleunigungen zusätzliche Beanspruchungen, welche unterhalb der Biegewechselfestigkeit zum Werkstoffversagen führen können.

### Beispiel 2

Ein polykristalliner quadratischer Siliciumstab von 1 m Länge und 50 mm Kantenlänge wurde auf einem Schwingungsprüfstand mit elektrodynamischem Erreger gebrochen.

Der Stab wurde nahe den beiden Stabenden in Anregungsrichtung gelenkig mittels Zylinderrollen in eine Aufspannvorrichtung eingeklemmt. Die Aufspannvorrichtung aus Stahl wurde mittels Schraubverbindung nahe den Klemmstellen an eine Betonwand hoher Masse und Steifigkeit weitgehend momentfrei montiert. Schnellspanner-Schnellverbindungen ließen den Stab schneller einklemmen.

Mittig horizontal wurde über einen geregelten Schwingungsprüfstand mittels elektrodynamischen Erregers der Siliciumstab in Biegeschwingung versetzt. Die Ankopplung des Siliciumstabes erfolgte mechanisch über eine Klemmung mit Linienkontakt.

Zur besseren Darstellung und Auswertung wurde eine sinusförmige Erregerkraft konstanter Größe in einem Frequenzbereich in der Nähe der erwarteten Resonanzfrequenz aufgegeben.

Die Erregung wurde als Gleitsinus mit einer definierten Frequenzänderungsgeschwindigkeit (hier 0,25 Octave/min) aufgegeben.

Die Erregerkraft wurde über einen Kraftsensor geregelt, welcher in eine Koppelstange aus einem steifen-starren Material integriert war.

Am Werkstück wurde die Schwingungsantwort mittels eines Beschleunigungssensors gemessen.

Die Erregerkraft wurde solange gesteigert, bis es zum Riss kam.

Zu Testzwecken wurde eine Durchlaufzeit von etwa zwei Minuten gewählt, um die Vergrößerungsfunktion in einem größeren Bereich aufzeichnen zu können.

In der Praxis ist bei bekannter Resonanzlage eine Zeit von wenigen Sekunden bis unter 1 Minute, typischerweise ca. 10 Sekunden erforderlich.

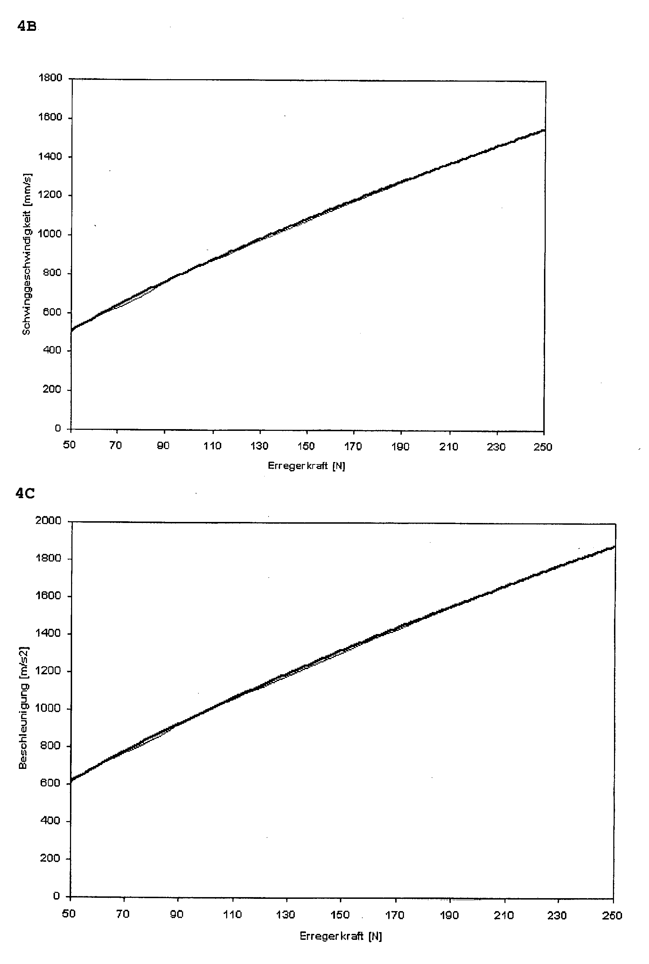

**Fig. 4 A-C** stellen die Schwingungsantwort in der Resonanzstelle in Abhängigkeit der Erregerkraft als (A) Schwingweg, (B) Schwinggeschwindigkeit und (C) Schwingbeschleunigung dar.

Die Berechnung der statischen Durchbiegung des Probestabes ergibt bei einer Belastung von 250 N eine Durchbiegung von 0,05 mm und damit eine max. Werkstoffspannung von 2,85 N/mm².

In der Resonanz vergrößert sich die Durchbiegung auf den Maximalwert 1,28 mm.

Dieser Wert bedingt formal eine Biegewechselspannung von 78 N/mm² und führt in Kombination mit der hohen Beschleunigung von 1900 m/s² zum Bruch.

Im Beispiel ergab sich eine Vergrößerung von 27.

Die Lage der Eigenfrequenz stimmt mit Berechnungen überein.

Ohne Ankopplung des Schwingungserregers ergibt sich eine rechnerische niedrigste Biegeeigenfrequenz von 214 Hz für den Prüfstab. Die Ankopplung des Schwingungserregers bringt Zusatzmassen ein, welche die Eigenfrequenz leicht absenken.

Die Vergrößerung fällt bei Kräften über 200 N, also bei Beanspruchungen kurz vor der Bruchlast auf Werte knapp unter Faktor 30.

Aufgrund der sehr niedrigen Dämpfungsgrade von Silicium wären Vergrößerungswerte von 50 bis 100 zu erwarten.

Es ist davon auszugehen, dass Dämpfungen an den Lagerungen und kleinere Anrisse augrund Mehrfachdurchläufen dies bewirken.

Grundsätzlich stimmen die Ergebnisse mit schwingungstechnischen Berechnungen gut überein.

Die Auslegung der erfindungsgemäßen Brechvorrichtung mit allen für das Resonanzbrechen benötigen Parameter (Lagerung des Stabes, Frequenz und Leistung des Schwingungserregers) kann somit für verschiedene Stababmessungen rechnerisch vorgenommen werden.

Besonders vorteilhaft ist das Verfahren bei Siliciumstäben mit Biegeeigenfrequenzen unter 200 Hz.

Die Resonanzfrequenzen können durch Erhöhung der Masse der Ankopplungsstange des Schwingungserregers deutlich gesenkt werden, wodurch sich der Anwendungsbereich auch auf Abmessungen ausdehnen lässt, die aufgrund zu hoher Biegeeigenfrequenz für das Resonanzbrechen weniger gut geeignet wären.

## Patentansprüche

1. Verfahren zum Brechen eines Siliciumkörpers, vorzugweise eines Stabs aus polykristallinem Silicium, umfassend die Schritte:
a) Bestimmung der niedrigsten Biegeigenfrequenz des Siliciumkörpers;
b) Anregung des Siliciumkörpers in seiner niedrigsten Biegeigenfrequenz mittels eines Schwingungserregers, wobei die Anregung an einer Anregungsstelle des Siliciumkörpers derart erfolgt, dass der Siliciumkörper an der Anregungsstelle bricht,
so dass ein Siliciumstück mit einer Bruchfläche resultiert.

2. Verfahren nach Anspruch 1, wobei als Schwingungserreger ein elektrodynamische Erreger, ein Hydraulik-Erreger oder ein gerichtete Unwuchterreger verwendet wird.

3. Verfahren nach einem der Ansprüche 1 oder 2, wobei Erregerkräfte des Schwingungserregers durch mechanische Ankopplung oder berührungslos vermittelt werden.

4. Verfahren nach einem der Ansprüche 1 bis 3, wobei während der Anregung der Siliciumkörper biegemomentenfrei befestigt ist.

5. Verfahren nach einem der Ansprüche 1 bis 4, wobei sich der Siliciumkörper während der Anregung 20-100 mm über einer Siliciumplatte befindet.

## Claims

1. Method for breaking a silicon body, preferably a rod of polycrystalline silicon, comprising the steps:
a) determining the lowest natural bending frequency of the silicon body;
b) exciting the silicon body in its lowest natural bending frequency by means of an oscillation generator, the excitation being carried out at an excitation point of the silicon body such that the silicon body breaks at the excitation point, so that a silicon portion having a fracture surface results.

2. Method according to Claim 1, wherein an electrodynamic generator, a hydraulic generator or a directional unbalance generator is used as the oscillation generator.

3. Method according to either of Claims 1 or 2, wherein excitation forces of the oscillation generator are imparted by mechanical coupling or contactlessly.

4. Method according to one of Claims 1 to 3, wherein the silicon body is fastened without bending moment during the excitation.

5. Method according to one of Claims 1 to 4, wherein the silicon body lies 20-100 mm above a silicon plate during the excitation.

## Revendications

1. Procédé de rupture d'un corps en silicium, de préférence d'une plaque en silicium polycristallin, comprenant les étapes suivantes :
a) détermination de la fréquence propre de flexion la plus basse du corps en silicium ;
b) excitation du corps en silicium dans sa fréquence propre de flexion la plus basse au moyen d'un générateur d'oscillations, l'excitation s'effectuant au niveau d'un point d'excitation du corps en silicium de telle sorte que le corps en silicium se rompe au point d'excitation de sorte que l'on obtienne une pièce en silicium avec une surface rompue.

2. Procédé selon la revendication 1, dans lequel on utilise en tant que générateur d'oscillations un excitateur électrodynamique, un excitateur hydraulique ou un excitateur à balourd orienté.

3. Procédé selon la revendication 1 ou 2, dans lequel les forces d'excitation du générateur d'oscillations sont transmises par accouplement mécanique ou sans contact.

4. Procédé selon l'une quelconque des revendications 1 à 3, dans lequel pendant l'excitation, le corps en silicium est fixé sans couple de flexion.

5. Procédé selon l'une quelconque des revendications 1 à 4, dans lequel le corps en silicium, pendant l'excitation, se trouve à 20-100 mm au-dessus d'une plaque en silicium.
